# EUROPÄISCHE PATENTSCHRIFT

(11) **EP 3 336 986 B1**
(45) Veröffentlichungstag und Bekanntmachung des Hinweises auf die Patenterteilung: **20.10.2021**
(21) Anmeldenummer: 17204341.6
(22) Anmeldetag: 29.11.2017
(51) Int. Cl.: H02G 1/08, H02G 3/04

(54) **VORRICHTUNG ZUM FÜHREN VON MINDESTENS ZWEI LEITUNGEN SOWIE EIN ANSCHLUSSMATERIAL UMFASSEND EINE SOLCHE VORRICHTUNG**
DEVICE FOR GUIDING AT LEAST TWO LINES, AS WELL AS A CONNECTING MATERIAL COMPRISING SUCH A DEVICE
DISPOSITIF DESTINÉ À GUIDER AU MOINS DEUX CONDUITES AINSI QUE MATIÈRE DE RACCORDEMENT COMPRENANT UN TEL DISPOSITIF

(30) Priorität: 16.12.2016 DE 102016225322; 14.03.2017 DE 102017204245
(43) Veröffentlichungstag der Anmeldung: 20.06.2018
(73) Patentinhaber: Power Plus Communications AG, 68167 Mannheim (DE)
(72) Erfinder: Marahtanov, Viktor, 64289 Darmstadt (DE)
(74) Vertreter: Patentanwälte Bauer Vorberg Kayser

(56) Entgegenhaltungen:
- EP-A2- 2 437 074
- WO-A1-2005/074214
- WO-A2-02/052686
- CH-A- 384 355
- DE-A1-102007 038 327
- US-A1- 2007 277 995

## Beschreibung

Die vorliegende Erfindung betrifft ein Anschlussmaterial zur Übertragung eines Breitband-Powerline-Signals über eine Energieversorgungsnetzwerk.

Aus der Praxis ist es bekannt, elektrische Leitungen durch unterschiedliche Verbindungselemente wie zum Beispiel Kabelbinder, Klebeband etc. miteinander zu verbinden, um die Leitungen geordnet zu führen. Dazu werden die elektrischen Leitungen mit den Verbindungselementen in mehr oder weniger regelmäßigen Abständen miteinander verbunden. Des Weiteren sind Kabelkanäle - bspw. an Büromöbeln - bekannt, welche zum Führen der elektrischen Leitungen dienen.

Insbesondere bei elektrischen Leitungen von Powerline Communication-Systemen gelten besondere Anforderungen bezüglich der Führung von elektrischen Leitungen. Bei Powerline Communication-Systemen wird ein Energieversorgungsnetzwerk zum Austausch von Kommunikationssignalen zwischen den Teilnehmern des Systems genutzt. Die zu übertragenden Signale bzw. Daten werden im höherfrequenten Bereich auf eine oder mehrere Leitungen des Energieversorgungsnetzwerks moduliert, beispielsweise auf eine Phase relativ zum Neutralleiter oder zwischen zwei Phasen. Bei der Breitbandvariante von Powerline Communication - Breitband-Powerline (BPL) - werden beispielsweise häufig Signalanteile im Frequenzbereich zwischen 1 und 30 MHz verwendet.

Bei den Leitungen des Anschlussmaterials, das zum Ein- bzw. Auskoppeln eines BPL-Signals von einer elektrischen Anlage dient, ist es notwendig, diese in einer möglichst exakten Ausrichtung zueinander zu führen. Dies ist insofern problematisch, da insbesondere der Abschnitt des Anschlussmaterials, der mit einer elektrischen Anlage, beispielsweise einem Straßenverteiler, gekoppelt wird, als einzeln geführte, separate Leitungen vorliegt. Da die Leitungen dieses Abschnitts nicht in einer definierten Position zueinander verlaufen, nimmt die Wellenimpedanz der Leitungen zu, was zu einer mitunter starken Dämpfung des BPL-Signals führt.

Das Zusammenführen der einzeln geführten Leitungen mittels Kabelbinder, Klebeband etc. ist problematisch, da die elektrische Anlage regelmäßig unter Spannung steht, wenn der Monteur die Leitungen mit der Anlage verbindet. Dabei werden von dem Monteur Schutzhandschuhe getragen und ist der zur Verfügung stehende Raum sehr beengt, so dass die Arbeit mit Klebeband, Kabelbindern etc. äußerst schwierig ist.

Des Weiteren ist es aufgrund der voranstehend beschriebenen Arbeitsbedingungen nur schwer möglich, diese Verbindungselemente wieder zu öffnen, um die miteinander verbundenen Leitungen voneinander zu trennen, zumal für den Monteur aufgrund der anliegenden Spannung ein erhebliches Verletzungsrisiko besteht. Ein weiterer Nachteil besteht darin, dass die Leitungen lediglich im Bereich der Verbindungselemente einen definierten Abstand zueinander aufweisen. Somit schwankt der Abstand der Leitungen über die Länge hinweg, was sich negativ auf die Wellenimpedanz und somit die Dämpfung des BPL-Signals auswirkt.

Die US 2007/0277995 A1 zeigt ein Doppelkabel für einen Kopfhörer, wobei ein erstes Kabel von einer geschlitzten Isolation umgeben ist. In den Schlitz kann ein zweites Kabel mit Hilfe eines Schiebers eingebracht und aus diesem ausgebracht werden.

Die CH 384 355 A, WO 02/052686 A2 und DE 10 2007 038 327 A1 beschreiben ebenfalls Vorrichtungen zur Führung eines Kabels. Des Weiteren betreffen die Dokumente WO 2005/074214 A1 und EP 2 437 074 A2 die Übertragung eines Breitband-Powerline-Signals.

Der vorliegenden Erfindung liegt die Aufgabe zugrunde, ein Anschlussmaterial anzugeben, bei dem mit konstruktiv einfachen Mittel eine Führung der Leitungen in einem definierten Abstand zueinander möglich ist.

Die Offenbarung betrifft des Weiteren eine Vorrichtung zum Führen von mindestens zwei Leitungen, insbesondere zur Datenübertragung, angegeben, umfassend einen Grundkörper zur Aufnahme der Leitungen, wobei der Grundkörper zumindest bereichsweise einen sich in Längsrichtung erstreckenden Schlitz aufweist, wobei ein Schieber an dem Grundkörper angeordnet ist, wobei der Schieber entlang der Längsrichtung des Grundkörpers bewegbar ist und wobei zumindest eine der Leitungen mittels des Schiebers durch den Schlitz in den Grundkörper einbringbar und/oder aus dem Grundkörper ausbringbar ist.

Dabei ist zunächst erkannt worden, dass durch die Anordnung eines die Leitungen aufnehmenden Grundkörpers, die Leitungen auf einfache Weise in einer definierten Position zueinander geführt werden können. Des Weiteren weist der Grundkörper einen in Längsrichtung des Grundkörpers verlaufenden Schlitz auf, durch den zumindest eine der Leitungen in den Grundkörper einbringbar bzw. aus diesem ausbringbar ist. In raffinierter Weise ist hierzu ein Schieber vorgesehen, der entlang der Längsrichtung des Grundkörpers bewegbar ist und über den zumindest eine der Leitungen durch den Schlitz in den Grundkörper hineingedrückt und/oder aus diesem herausgezogen wird, je nachdem, in welche Richtung der Schieber bewegt wird. Durch diese konstruktive Maßnahme ist die Vorrichtung auch in einem beengten Raum und mit Schutzhandschuhen sehr leicht handhabbar. Somit lassen sich Leitungen äußerst einfach in einer definierten Position zueinander führen und auch wieder voneinander entfernen bzw. lösen, so dass die Vorrichtung äußerst flexibel einsetzbar ist und auch ein mehrfacher Gebrauch möglich ist. Ein weiterer Vorteil besteht darin, dass die mit dem Schieber in Kontakt stehende Leitung durch den Schieber zumindest geringfügig gegen ein weiteres Herausziehen und/oder Einbringen in den Grundkörper gesichert ist.

Es wird darauf hingewiesen, dass der Grundkörper in vorteilhafter Weise einteilig ausgebildet ist. Jedoch ist es denkbar, dass der Grundkörper aus mehreren Einzelteilen besteht. Wesentlich ist, dass die in dem Grundkörper befindlichen Leitungen in einer definierten Position zueinander geführt sind und dass zumindest eine der Leitungen durch den Schlitz in den Grundkörper bzw. einem in den Grundkörper ausgebildeten Hohlraum einbringbar und aus diesem ausbringbar ist.

Unter einem Schlitz ist eine Öffnung zu verstehen, die ausreichend groß ist, um eine Leitung hindurchführen. In vorteilhafter Weise können die Ränder des Schlitzes zumindest geringfügig unter Vorspannung stehen, so dass diese im Wesentlichen aneinander liegen, wenn die Leitung den Schlitz passiert hat. Dadurch wird erreicht, dass die durch den Schlitz realisierte Öffnung zumindest im Wesentlichen geschlossen ist und die Leitung sicher in dem Grundkörper aufgenommen ist.

Unter einer Leitung ist ein elektrischer Leiter zur Übertragung eines Signals, insbesondere eines BPL-Signals, zu verstehen, der eine isolierende Umhüllung aufweist. Eine einadrige Leitung umfasst dabei lediglich einen einzigen Leiter. Eine mehradrige Leitung ist durch mindestens zwei gegeneinander isolierte, zusammengefasste Leiter gebildet.

In vorteilhafter Weise verlaufen die Leitungen innerhalb des Grundkörpers im Wesentlichen parallel zueinander. Dadurch wird erreicht, dass die Wellenimpedanz der Leitungen minimiert wird, so dass sich die Dämpfung des zu übertragenden Signals verringert. Insbesondere ist es von Vorteil, wenn die Leitungen mit möglichst geringem Abstand zueinander verlaufen.

In weiter vorteilhafter Weise weist der Grundkörper eine längliche Form auf. Der Grundkörper kann beispielsweise im Wesentlichen gerade ausgebildet sein. Des Weiteren ist denkbar, dass die Geometrie des Grundkörpers an die Einbausituation angepasst ist, der Grundkörper beispielsweise gebogen ausgebildet ist. Wesentlich ist dabei, dass die Leitungen innerhalb des Grundkörpers in einer definierten Ausrichtung - vorzugsweise parallel - zueinander verlaufen.

Zur Realisierung einer besonders einfachen Konstruktion ist es denkbar, dass der Grundkörper als Rohr ausgebildet ist, wobei das Rohr nicht zwangsweise einen runden Querschnitt aufweisen muss. Das Rohr kann beispielsweise aus einem nichtleitendem Material, insbesondere Polyvinylchlorid (PVC) bestehen. Durch den sich in Längsrichtung erstreckenden Schlitz sind die Leitungen in das Rohr einbringbar, wobei zumindest eine der Leitungen durch den entlang des Rohrs bewegbaren Schieber in das Rohr einbringbar und/oder aus dem Rohr ausbringbar ist.

In besonders vorteilhafter Weise sind an dem Grundkörper zwei Schlitze ausgebildet. Die Schlitze können beispielsweise an gegenüberliegenden Seiten des Grundkörpers realisiert sein, so dass die elektrischen Leitungen jeweils durch einen eigenen, separaten Schlitz in den Grundkörper einbringbar und aus diesem entnehmbar sind. Dabei ist denkbar, dass in dem Grundkörper zwei voneinander getrennte Hohlräume verlaufen, wobei jeweils einer der Schlitze einen Durchgang zu einem der Hohlräume realisiert. Dadurch können die Leiter in voreinander getrennten Hohlräumen des Grundkörpers aufgenommen werden.

An dieser Stelle sei darauf hingewiesen, dass der Begriff Hohlraum in Bezug auf die erfindungsgemäße Vorrichtung im weitesten Sinne zu verstehen ist, nämlich lediglich erforderlich ist, dass ein bzw. mehrere Leitungen innerhalb des Grundkörpers anordenbar sind. Insbesondere kann der Grundkörper kann aus einem elastischen Material bestehend und im Wesentlichen massiv ausgebildet sein bzw. mit einem elastischen Material gefüllt sein, so dass der benötigte Hohlraum durch das Einbringen der Leitung geschaffen wird.

Zur Realisierung einer möglichst einfachen Konstruktion des Schiebers kann dieser den Grundkörper zumindest teilweise - in Umfangsrichtung - umschließen. Dadurch ist der Schieber sicher an dem Grundkörper angeordnet und entlang der Längsrichtung des Grundkörpers bewegbar. In einer besonders einfachen Ausführungsform kann es sich bei dem Schieber um einen Ring handeln, der über den Grundkörper geschoben ist. Je nachdem, von welcher Seite der Ring gegenüber der Leitung angeordnet ist, kann durch ein Verschieben des Rings die Leitung in den Grundkörper hineingedrängt oder aus diesem herausgezogen werden. Durch die Anordnung von zwei Ringen als Schieber kann die Leitung mittels des einen Rings in den Grundkörper eingebracht und Mittels des zweiten Rings aus dem Grundkörper ausgebracht werden. An dieser Stelle sei darauf hingewiesen, dass der Schieber nicht zwangsweise als geschlossener Ring ausgebildet sein muss. Es ist ausreichend, wenn der Schieber den Grundkörper in Umfangsrichtung teilweise umschließt, so dass der Schieber fest und in Längsrichtung bewegbar mit dem Grundkörper verbunden ist. Jegliche form- und/oder kraftschlüssige Verbindung zwischen Grundkörper und Schieber ist denkbar, die ein verschieben des Schiebers in Längsrichtung des Grundkörpers ermöglicht.

In besonders vorteilhafter Weise ist denkbar, dass der Schieber zumindest in einer definierten Position an dem Grundkörper fixierbar ist, beispielsweise festklemmbar oder verrastbar, so dass eine Bewegung in Längsrichtung verhindert wird. Somit ist für zumindest eine der Leitungen die Position definiert, in der sie in den Grundkörper eindringt bzw. aus diesem austritt.

In erfindungsgemäßer Weise weist der Schieber zumindest einen Durchgang auf, durch den die Leitung hindurchgeführt wird. Dadurch wird die Leitung bei einer Bewegung des Schiebers aus dem Grundkörper herausgezogen bzw. in diesen eingebracht, je nach Bewegungsrichtung des Schiebers. Des Weiteren ist denkbar, dass der Schieber mehrere Durchgänge, entsprechend der Anzahl der elektrischen Leitungen aufweist, so dass jede der Leitungen durch einen separaten Durchgang hindurchführbar ist. Gemäß einer weiteren Ausführungsform können mehrere Leitungen durch einen einzigen Durchgang hindurchgeführt sein.

Als weitere Schutzmaßnahme zur Vermeidung von Unfällen ist es denkbar, dass der Schieber aus einem nichtleitenden bzw. schlechtleitenden Werkstoff hergestellt ist. Hierbei kann es sich um einen Kunststoff, beispielsweise Polyvinylchlorid handeln. Alternativ oder zusätzlich ist denkbar, dass der Grundkörper zumindest teilweise mit einem isolierenden Material gefüllt ist, insbesondere Polyvinylchlorid. Durch das isolierende Material sind die Leitungen nochmals isoliert und ist es des Weiteren möglich, die Leitungen exakter zu führen, nämlich aufgrund des verringerten Hohlraums innerhalb des Grundkörpers. Dabei ist des Weiteren denkbar, dass in dem isolierenden Material zumindest Bereichsweise ein sich in Längsrichtung des Grundkörpers erstreckender Schlitz ausgebildet ist. Durch den Schlitz ist eine Leitung durchführbar und somit in den Grundkörper einbringbar.

Die zugrundeliegende Aufgabe wird durch Anspruch 1 gelöst. Danach ist ein Anschlussmaterial zur Übertragung eines Breitband-Powerline-Signals über ein Energieversorgungsnetzwerk, mit einem ersten Abschnitt bestehend aus einer mehradrigen, insbesondere dreiadrigen, Leitung und einem zweiten Abschnitt bestehend aus zwei separaten, insbesondere einadrigen, Leitungen, wobei der erste Abschnitt und der zweite Abschnitt miteinander verbunden sind, wobei an einem freien Ende der mehradrigen Leitung des ersten Abschnitts ein Verbindungselement zum Verbinden mit einem Breitband-Powerline-Modem ausgebildet ist, und wobei zumindest an einem freien Ende der Leitungen des zweiten Abschnitts ein Anschlusselement zum Verbinden mit einem Anschlussmittel einer elektrischen Anlage ausgebildet ist, dadurch gekennzeichnet, dass ein Grundkörper zur Aufnahme zumindest eines Bereichs der Leitungen des zweiten Abschnitts angeordnet ist, dass der Grundkörper zumindest bereichsweise einen sich in Längsrichtung des Grundkörpers erstreckenden Schlitz aufweist, dass ein Schieber an dem Grundkörper angeordnet ist, dass der Schieber entlang der Längsrichtung des Grundkörpers bewegbar ist und zumindest einen Durchgang für zumindest eine Leitung aufweist, dass zumindest eine der Leitungen mittels des Schiebers durch den Schlitz in den Grundkörper einbringbar und/oder aus dem Grundkörper ausbringbar ist und dass der Schieber einen radial nach Innen verlaufenden Vorsprung aufweist.

In erfindungsgemäßer Weise ist erkannt worden, dass durch eine solche Anordnung bei einem Anschlussmaterial zur Datenübertragung die Dämpfung des zu übertragenden Signals erheblich minimiert werden kann. Dies wird durch die Führung der elektrischen Leitungen in einem definierten, insbesondere geringen, Abstand zueinander erzielt, wodurch die Wellenimpedanz der Leitungen sinkt. Ein weiterer Vorteil besteht darin, dass die Unfallgefahr für den Anwender des Anschlussmaterials erheblich minimiert wird.

In erfindungsgemäßer Weise ist an dem freien Ende der mehradrigen Leitung des ersten Abschnitts ein Verbindungselement zum Verbinden mit einem elektrischen Gerät ausgebildet. Hierbei kann es sich beispielsweise um einen Steckverbinder handeln, der zum Verbinden mit einem Breitband-Powerline-Modem ausgebildet ist. Weiterhin ist an zumindest einem der freien Enden der Leitungen des zweiten Abschnitts ein Anschlusselement zum Verbinden mit einem Anschlussmittel einer elektrischen Anlage, insbesondere einer Niederspannungshochleistungslastleiste, ausgebildet.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Darstellung ein Ausführungsbeispiel eines Teils eines erfindungsgemäßen Anschlussmaterials,
- Fig. 2: in einer weiteren Ansicht das Ausführungsbeispiel gemäß Fig. 1,
- Fig. 3: in einer schematischen Darstellung den Schieber gemäß Fig. 1,
- Fig. 4: in einer weiteren Ansicht den Schieber aus Fig. 3,
- Fig. 5: in einer schematischen Darstellung drei Ausführungsbeispiele eines Grundkörpers eines erfindungsgemäßen Anschlussmaterials,
- Fig. 6: in einer schematischen Darstellung ein weiteres Ausführungsbeispiel eines Teils eines erfindungsgemäßen Anschlussmaterials,
- Fig. 7: in einer weiteren Ansicht das Ausführungsbeispiel gemäß Fig. 6,
- Fig. 8: in einer schematischen Darstellung den Schieber gemäß Fig. 6,
- Fig. 9: in einer weiteren Ansicht den Schieber gemäß Fig. 8.

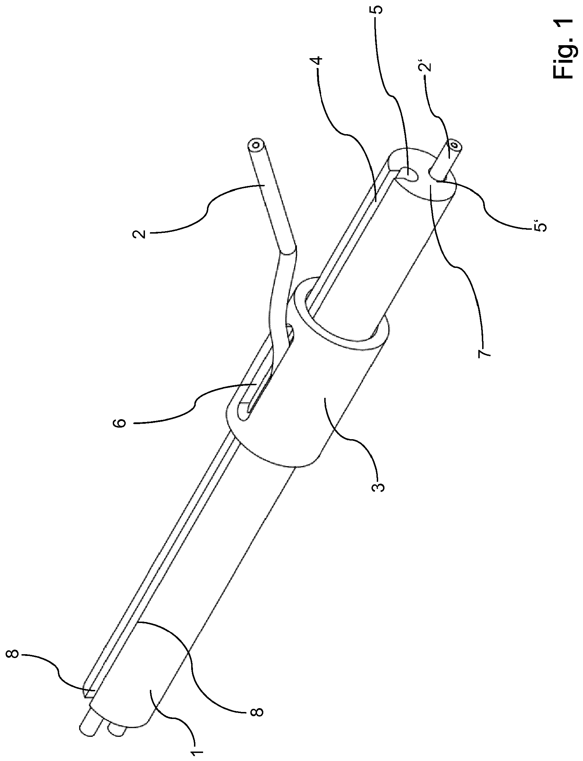

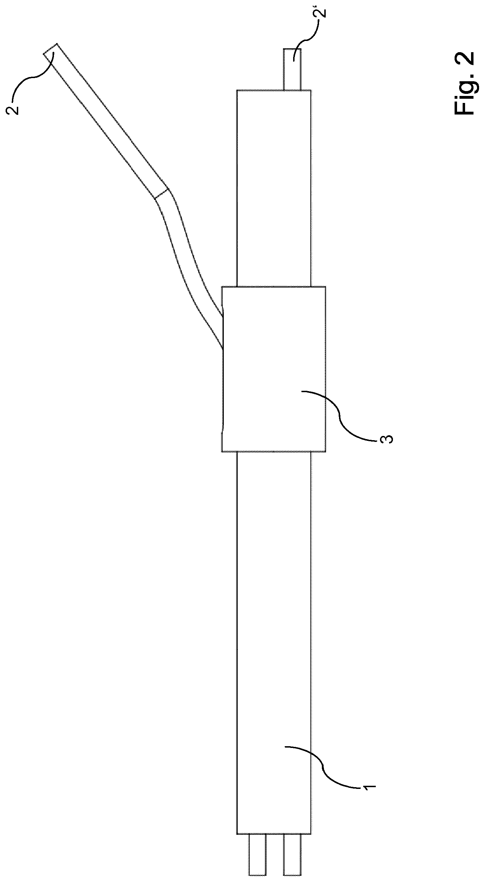

Die Fig. 1 und 2 zeigen in einer schematischen Darstellung ein erstes Ausführungsbeispiel eines Teils eines erfindungsgemäßen Anschlussmaterials. Dieses weist einen Grundkörper 1 zur Aufnahme von mindestens zwei Leitungen 2, 2' auf. An dem Grundkörper 1 ist ein Schieber 3 angeordnet, der entlang der Längsrichtung des Grundkörpers 1 verschiebbar ist. Des Weiteren weist der Grundkörper 1 einen Schlitz 4 auf, der sich ebenfalls in Längsrichtung des Grundkörpers 1 erstreckt. Durch den Schlitz 4 ist die Leitung 2 in den Hohlraum 5 des Grundkörpers 1 einbringbar.

Dazu weist der Schieber 2 einen Durchgang 6 auf, durch den die Leitung 2 hindurchgeführt ist. Bei einer Bewegung des Schiebers 2 entlang der Längsrichtung des Grundkörpers 1 wird die Leitung 2 - je nach Bewegungsrichtung - in den Grundkörper 1 hineingedrückt bzw. eingebracht oder aus dem Grundkörper 1 herausgezogen bzw. ausgebracht. Der Schieber 2 lässt sich auch sehr einfach bedienen, wenn der Monteur Schutzhandschuhe trägt und nur wenig Raum zur Handhabung der Vorrichtung zur Verfügung steht.

In dem Grundkörper 1 ist ein zweiter Hohlraum 5' ausgebildet, der zur Aufnahme der zweiten Leitung 2' dient. Die Hohlräume 5, 5' sind durch ein isolierendes Material 7, beispielsweise PVC, voneinander getrennt. In dem hier dargestellten Ausführungsbeispiel ist der Grundkörper 1 einteilig ausgebildet.

Dabei ist denkbar, dass das isolierende Material 7 ebenfalls einen in Längsrichtung verlaufenden Schlitz aufweist, um die zweite Leitung 2' durch den Schlitz in den Hohlraum 5' einzubringen. Alternativ oder zusätzlich kann an dem Grundkörper 1 ein weiterer Schlitz ausgebildet sein, durch den die zweite Leitung 2' in den Hohlraum 5' einbringbar bzw. aus diesem entfernbar ist. In dem hier dargestellten Ausführungsbeispiel ist die Leitung 2' im Wesentlichen fest in dem Hohlraum 5' angeordnet ist und lediglich die Leitung 2 aus dem Hohlraum 5 und somit dem Grundkörper 1 entnehmbar und wieder einbringbar ist.

Aus den Fig. 1 und 2 geht des Weiteren hervor, dass die Ränder 8 des Schlitzes 4 sich nahezu berühren, so dass der Hohlraum 5 im Wesentlichen geschlossen ist, wenn die Leitung 2 ein- bzw. ausgebracht ist. Durch die Wahl eines geeigneten Werkstoffes für den Grundkörper 1 können die Ränder 8 derart unter Vorspannung stehen, dass sie sich berühren, wenn die Leitung 2 ein- bzw. ausgebracht ist.

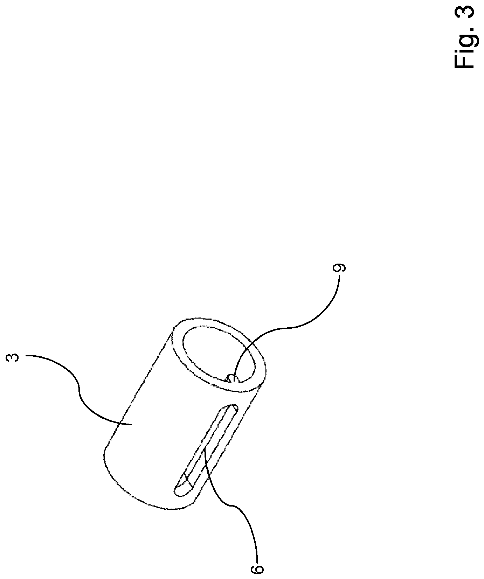

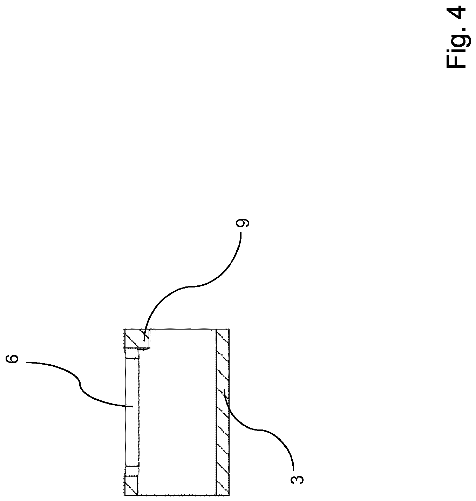

In den Fig. 3 und 4 ist der Schieber 3 des in den Fig. 1 und 2 dargestellten Ausführungsbeispiels gezeigt. Daraus geht deutlich hervor, dass der Schieber 3 einen radial nach Innen verlaufenden, Vorsprung 9 aufweist, mit welchem er in den Schlitz 4 des Grundkörpers 1 eingreift. Durch den Vorsprung 9 wird ein Verdrehen des Schiebers 3 gegenüber dem Grundkörper 2 verhindert. Des Weiteren spreizt der Vorsprung 9 die Ränder 8 auseinander, so dass das Ein- bzw. Ausbringen der Leitung 1 einfacher erfolgen kann.

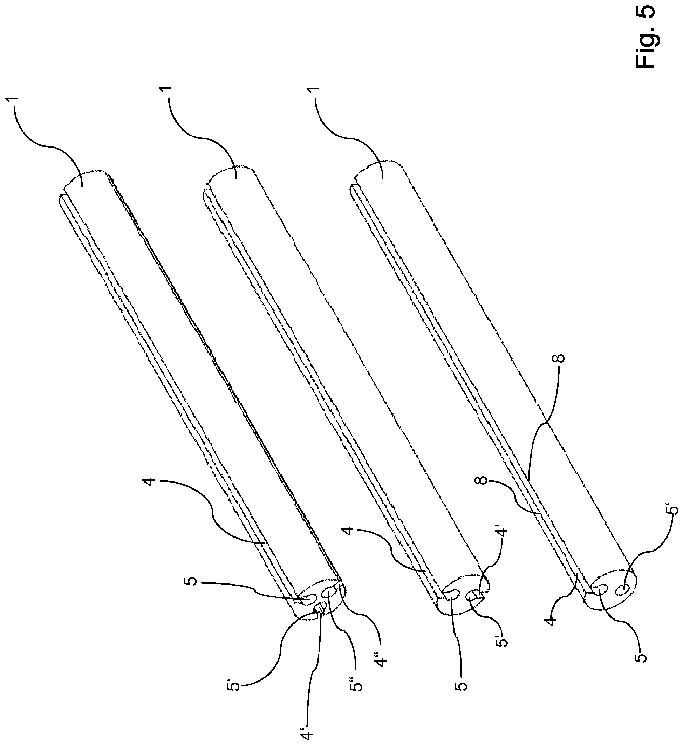

In Fig. 5 sind mehrere Ausgestaltungen des Grundkörpers 1 dargestellt. Dieser kann beispielsweise zwei oder drei Leitungen 2, 2', 2" aufnehmen. Je nachdem, wie viele Hohlräume 5, 5', 5" einen Schlitz 4 aufweisen, ist der Schieber 3 entsprechend anzupassen, nämlich gemäß der in den Fig. 2 und 3 dargestellten Ausgestaltung.

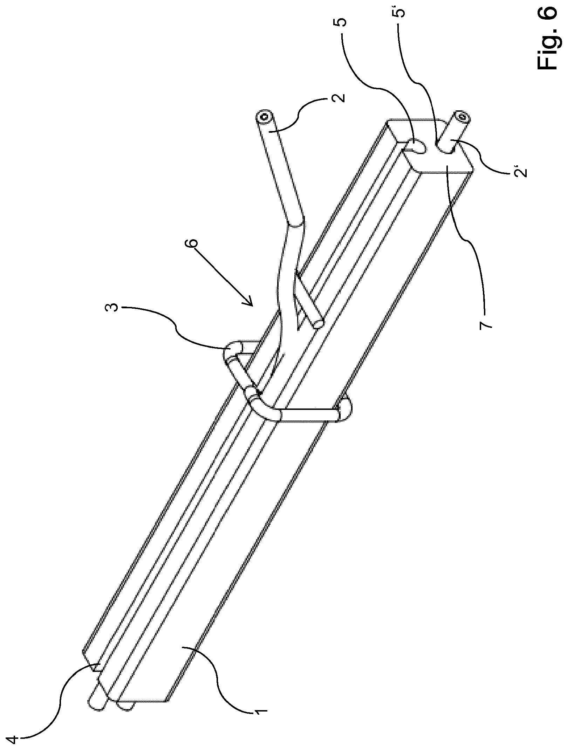

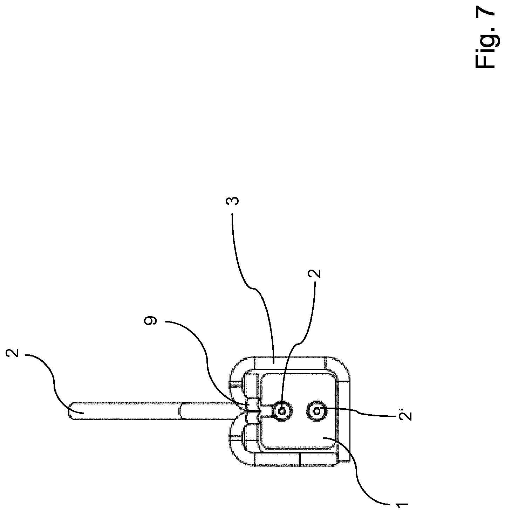

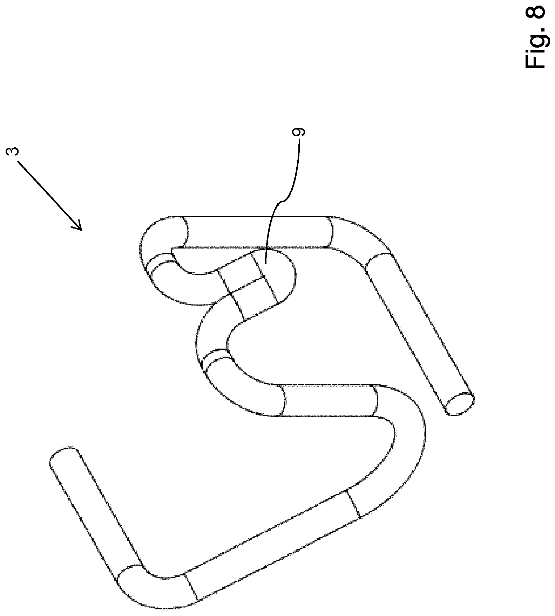

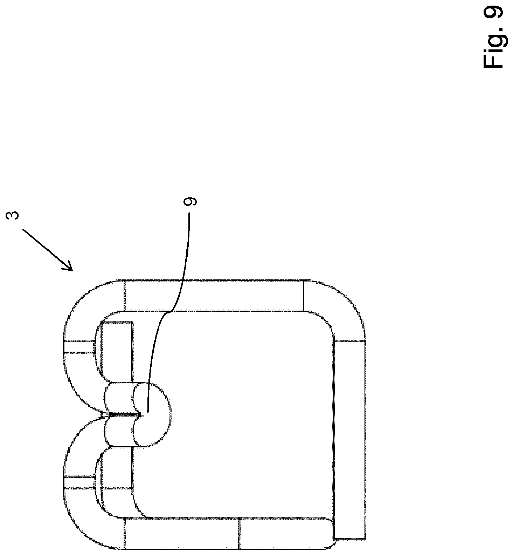

In den Fig. 6 bis 9 ist ein weiteres Ausführungsbeispiel eines Teils eines erfindungsgemäßen Anschlussmaterials dargestellt. Dieses umfasst einen Grundkörper 1 zur Aufnahme von zwei Leitungen 2, 2' auf. Die Leitung 2 ist durch einen Schieber 3 durch den Schlitz 4 in den Grundkörper 1 einbringbar bzw. aus diesem entfernbar. Der Schieber 3 umschließt dem Grundkörper 1 und weist einen Vorsprung 9 auf, mit welchem er in den Schlitz 4 eingreift. Hierzu wird insbesondere auf die isolierten Darstellungen des Schiebers 3 in den Fig. 8 und 9 verwiesen. Im Konkreten kann der Schieber 3 aus einem gebogenen Draht hergestellt sein. Alternativ ist denkbar, dass der Schieber 3 aus einem Kunststoff gefertigt ist. Zur Vermeidung von Wiederholungen wird an dieser Stelle auf die Beschreibung der Fig. 1 bis 5 verwiesen, die analog für das Ausführungsbeispiel der Fig. 6 bis 9 gelten.

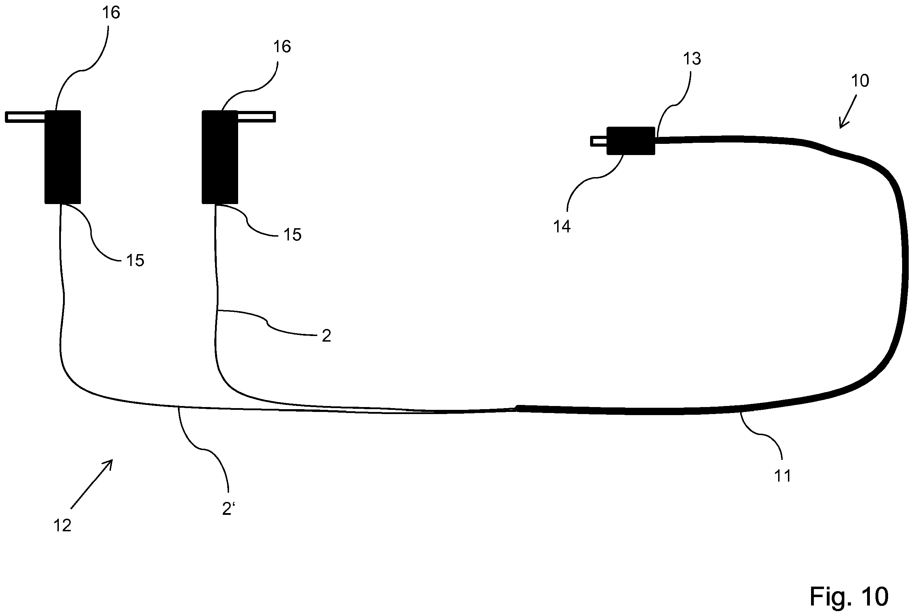

Fig. 10 zeigt in einer schematischen Darstellung einen Teil eines erfindungsgemäßen Anschlussmaterials. Das Anschlussmaterial weist einen ersten Abschnitt 10 auf, der aus einer dreiadrigen Leitung 11 besteht. Der erste Abschnitt 10 ist mit dem zweiten Abschnitt 12 verbunden. Der zweite Abschnitt 12 besteht aus zwei separaten, einadrigen Leitungen 2, 2'. An dem freien Ende 13 des ersten Abschnitts 10 ist ein Steckverbinder 14 zur Kopplung mit einem Breitband-Powerline-Modem ausgebildet. Die freien Enden 15 der Leitungen 2, 2' des zweiten Abschnitts weisen jeweils ein Anschlusselement 16 zum Verbinden mit einem Anschlussmittel einer elektrischen Anlage, insbesondere eine Niederspannungshochleistungslastleiste auf.

Um die Dämpfung der Signale in den Leitungen 2, 2' zu verringern, werden die Leitungen 2, 2' zumindest bereichsweise in einer erfindungsgemäßen Vorrichtung angeordnet bzw. geführt. Dadurch wird erreicht, dass die Leiter 2, 2' in einem definierten, geringen Abstand zueinander geführt sind, wobei der Abstand allenfalls geringfügig über die Länge der Leitungen 2, 2' hinweg variiert. Bei einer solchen Anordnung wird die Wellenimpedanz der Leiter minimiert, was zu einer Verbesserung der Signalübertragung führt.

Hinsichtlich weiterer vorteilhafter Ausgestaltungen der erfindungsgemäßen Vorrichtung sowie des erfindungsgemäßen Anschlussmaterials wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung sowie des erfindungsgemäßen Anschlussmaterials lediglich zur Erörterung der beanspruchten Lehre dienen, diese jedoch nicht auf die Ausführungsbeispiele einschränken.

### Bezugszeichenliste

- 1: Grundkörper
- 2,2': Leitung
- 3: Schieber
- 4: Schlitz
- 5,5': Hohlraum
- 6: Durchgang
- 7: isolierende Material
- 8: Ränder
- 9: Vorsprung
- 10: erster Abschnitt
- 11: dreiadrige Leitung
- 12: zweiter Abschnitt
- 13: freies Ende
- 14: Steckverbinder
- 15: freie Enden
- 16: Anschlusselement

## Patentansprüche

1. Anschlussmaterial zur Übertragung eines Breitband-Powerline-Signals über ein Energieversorgungsnetzwerk, mit einem ersten Abschnitt (10) bestehend aus einer mehradrigen, insbesondere dreiadrigen, Leitung (11) und einem zweiten Abschnitt (12) bestehend aus zwei separaten, insbesondere einadrigen, Leitungen (2, 2'), wobei der erste Abschnitt (10) und der zweite Abschnitt (12) miteinander verbunden sind, wobei an einem freien Ende (14) der mehradrigen Leitung (11) des ersten Abschnitts (10) ein Verbindungselement zum Verbinden mit einem Breitband-Powerline-Modem ausgebildet ist, und wobei zumindest an einem freien Ende (15) der Leitungen des zweiten Abschnitts (12) ein Anschlusselement (16) zum Verbinden mit einem Anschlussmittel einer elektrischen Anlage ausgebildet ist, wobei ein Grundkörper (1) zur Aufnahme zumindest eines Bereichs der Leitungen (2, 2') des zweiten Abschnitts (12) angeordnet ist, dass der Grundkörper (1) zumindest bereichsweise einen sich in Längsrichtung des Grundkörpers (1) erstreckenden Schlitz (4) aufweist, dass ein Schieber (3) an dem Grundkörper (1) angeordnet ist, dass der Schieber (3) entlang der Längsrichtung des Grundkörpers (1) bewegbar ist und zumindest einen Durchgang (6) für zumindest eine Leitung (2, 2') aufweist, dass zumindest eine der Leitungen (2, 2') mittels des Schiebers (3) durch den Schlitz (4) in den Grundkörper (1) einbringbar und/oder aus dem Grundkörper (1) ausbringbar ist und dass der Schieber einen radial nach Innen verlaufenden Vorsprung (9) aufweist, mit welchem er in den Schlitz (4) des Grundkörpers (1) eingreift.

2. Anschlussmaterial nach Anspruch 1, wobei an dem freien Ende (14) der mehradrigen Leitung (11) des ersten Abschnitts (10) ein Steckverbinder (14) zum Verbinden mit einem Breitband-Powerline-Modem, ausgebildet ist.

3. Anschlussmaterial nach Anspruch 1 oder 2, wobei zumindest an einem der freien Enden (15) der Leitungen des zweiten Abschnitts (12) ein Anschlusselement (16) zum Verbinden mit einem Anschlussmittel einer elektrischen Anlage, nämlich einer Niederspannungshochleistungslastleiste, ausgebildet ist.

4. Anschlussmaterial nach einem der Ansprüche 1 bis 3, wobei Leitungen (2, 2') innerhalb des Grundkörpers (1) im Wesentlichen parallel zueinander verlaufen.

5. Anschlussmaterial nach einem der Ansprüche 1 bis 4, wobei der Grundkörper (1) eine längliche Form aufweist.

6. Anschlussmaterial nach einem der Ansprüche 1 bis 5, wobei der Grundkörper (1) als Rohr, insbesondere aus einem nichtleitenden Material, beispielsweise aus Polyvinylchlorid, ausgebildet ist.

7. Anschlussmaterial nach einem der Ansprüche 1 bis 6, wobei an dem Grundkörper (1) zwei Schlitze (4), vorzugsweise an gegenüberliegenden Seiten des Grundkörpers (1), ausgebildet sind.

8. Anschlussmaterial nach einem der Ansprüche 1 bis 7, wobei der Schieber (3) den Grundkörper (1) zumindest teilweise umschließt.

9. Anschlussmaterial nach einem der Ansprüche 1 bis 8, wobei an dem Schieber (3) zwei Durchgänge (6) ausgebildet sind.

10. Anschlussmaterial nach einem der Ansprüche 1 bis 9, wobei der Schieber (3) aus einem nicht leitenden Werkstoff, insbesondere einem Kunststoff, vorzugsweise Polyvinylchlorid, hergestellt ist.

11. Anschlussmaterial nach einem der Ansprüche 1 bis 10, wobei der Grundkörper (1) teilweise mit einem isolierenden Material (7), insbesondere einem Kunststoff, beispielsweise Polyvinylchlorid, gefüllt ist.

12. Anschlussmaterial nach Anspruch 11, wobei in dem isolierenden Material (7) zumindest bereichsweise ein sich in Längsrichtung des Grundkörpers (1) erstreckender Schlitz ausgebildet ist.

## Claims

1. A connection material for transmitting a broadband powerline signal across an energy supply network, with a first section (10) consisting of a multicore, in particular three-core line (11) and a second section (12) consisting of two separate, in particular single-core lines (2, 2'), wherein the first section (10) and the second section (12) are connected with each other, wherein a connecting element is formed at a free end (14) of the multicore line (11) of the first section (10) for connecting to a broadband powerline modem, and wherein a connection element (16) is formed at least at one free end (15) of the lines of the second section (12) for connecting to a connection means of an electrical system,
wherein a basic body (1) is arranged for receiving at least one group of the lines (2, 2') of the second section (12), wherein the basic body (1), at least section-wise, has a slot (4) extending in longitudinal direction of the basic body (1), wherein a slide (3) is arranged on the basic body (1), the slide (3) being movable along the longitudinal direction of the basic body (1) and having a passageway (6) for at least one line (2, 2'), wherein at least one of the lines (2, 2') can be inserted into and/or removed from the basic body (1) through the slot (4) by means of the slide (3) and wherein the slide has a projection (9) extending radially inwards, with which it engages in the slot (4) of the basic body (1).

2. The connection material according to claim 1, wherein a plug-in connector (14) is arranged at the free end (14) of the multicore line (11) of the first section (10) for connecting to a broadband powerline modem.

3. The connection material according to claim 1 or 2, wherein at least at one of the free ends (15) of the lines of the second section (12) a connection element (16) is formed for connecting to a connection means of an electrical system, namely a low voltage heavy duty load rail.

4. The connection material according to one of claims 1 to 3, wherein the lines (2, 2') within the basic body (1) extend essentially in parallel to each other.

5. The connection material according to one of claims 1 to 4, wherein the basic body (1) comprises an elongate shape.

6. The connection material according to one of claims 1 to 5, wherein the basic body (1) is formed as a pipe, in particular from a non-conducting material such as from polyvinylchloride.

7. The connection material according to one of claims 1 to 6, wherein two slots (4) are formed on the basic body (1), preferably on opposite sides of the basic body (1).

8. The connection material according to one of claims 1 to 7, wherein the slide (3) encloses the basic body (1) at least partially.

9. The connection material according to one of claims 1 to 8, wherein two passageways (6) are formed on the slide (3).

10. The connection material according to one of claims 1 to 9, wherein the slide (3) is manufactured from a non-conducting material, in particular a plastic, preferably polyvinylchloride.

11. The connection material according to one of claims 1 to 10, wherein the basic body (1) is partially filled with an insulating material (7), in particular a plastic such as polyvinylchloride.

12. The connection material according to claim 11, wherein a slot extending, at least section-wise, in longitudinal direction of the basic body (1) is formed in the insulating material (7).

## Revendications

1. Matériel de raccordement pour la transmission d'un signal de ligne électrique à large bande via un réseau d'alimentation, comportant une première section (10) constituée d'une ligne multiconducteur, notamment à trois conducteurs (11) et une deuxième section (12) constituée de deux lignes séparées, notamment à conducteur unique (2, 2'), dans lequel la première section (10) et la deuxième section (12) sont reliées l'une à l'autre, dans lequel un élément de connexion pour la connexion à un modem de ligne électrique à large bande est réalisé à une extrémité libre (14) de la ligne multiconducteur (11) de la première section (10), et dans lequel un élément de connexion (16) pour la connexion à un moyen de connexion d'un système électrique est réalisé au moins à une extrémité libre (15) des lignes de la deuxième section (12), dans lequel un corps de base (1) est agencé pour recevoir au moins une zone des lignes (2, 2') de la deuxième section (12), le corps de base (1) présente au moins par endroits une fente (4) s'étendant dans la direction longitudinale du corps de base (1), un coulisseau (3) est disposé sur le corps de base (1), le coulisseau (3) peut être déplacé le long de la direction longitudinale du corps de base (1) et comporte au moins un passage (6) pour au moins une ligne (2, 2'), au moins une des lignes (2, 2') au moyen du coulisseau (3) peut être introduite à travers la fente (4) dans le corps de base (1) et/ou retirée du corps de base (1) et que le coulisseau présente une saillie (9) s'étendant radialement vers l'intérieur, avec laquelle il s'engage dans la fente (4) du corps de base (1).

2. Matériel de raccordement selon la revendication 1, dans lequel à l'extrémité libre (14) de la ligne multiconducteur (11) de la première section (10) est réalisé un connecteur (14) pour la connexion à un modem de ligne électrique à large bande.

3. Matériel de raccordement selon la revendication 1 ou 2, dans lequel à au moins une des extrémités libres (15) des lignes de la deuxième section (12) est réalisé un élément de connexion (16) pour la connexion à un moyen de connexion d'un système électrique, à savoir une barrette de charge basse tension haute performance.

4. Matériel de raccordement selon une des revendications 1 à 3, dans lequel les lignes (2,2') s'étendent essentiellement parallèlement les unes aux autres à l'intérieur du corps de base (1).

5. Matériel de raccordement selon une des revendications 1 à 4, dans lequel le corps de base (1) présente une forme allongée

6. Matériel de raccordement selon une des revendications 1 à 5, dans lequel le corps de base (1) est réalisé sous la forme d'un tube, notamment en un matériau non conducteur, par exemple en polychlorure de vinyle.

7. Matériel de raccordement selon une des revendications 1 à 6, dans lequel le corps de base (1) présente deux fentes (4), de préférence sur des côtés opposés du corps de base (1).

8. Matériel de raccordement selon une des revendications 1 à 7, dans lequel le coulisseau (3) enserre au moins partiellement le corps de base (1).

9. Matériel de raccordement selon une des revendications 1 à 8, dans lequel deux passages (6) sont ménagés sur le coulisseau (3).

10. Matériel de raccordement selon une des revendications 1 à 9, dans lequel le coulisseau (3) est réalisé en un matériau non conducteur, notamment en matière plastique, de préférence en polychlorure de vinyle.

11. Matériel de raccordement selon une des revendications 1 à 10, dans lequel le corps de base (1) est rempli partiellement avec un matériau isolant (7), notamment une matière plastique, par exemple du polychlorure de vinyle.

12. Matériel de raccordement selon la revendication 11, dans lequel une fente s'étendant dans la direction longitudinale du corps de base (1) est réalisée dans le matériau isolant (7), au moins par endroits.
